# EUROPÄISCHE PATENTSCHRIFT

(11) **EP 0 708 151 B1**
(45) Veröffentlichungstag und Bekanntmachung des Hinweises auf die Patenterteilung: **11.07.2001**
(21) Anmeldenummer: 95810629.6
(22) Anmeldetag: 05.10.1995
(51) Int. Cl.: C09B 62/505, C09B 62/06

(54) **Faserreaktive Anthrachinonfarbstoffe, Verfahren zu deren Herstellung und deren Verwendung**
Fiberreactive anthraquinone dyes, process for their preparation and the use thereof
Colorants anthraquinoniques réactifs sur la fibre, procédé pour leur préparation et leur utilisation

(30) Priorität: 14.10.1994 CH 309294
(43) Veröffentlichungstag der Anmeldung: 24.04.1996
(73) Patentinhaber: Ciba Specialty Chemicals Holding Inc., 4057 Basel (CH)
(72) Erfinder: Müller, Bernhard, Dr., D-79588 Efringen-Kirchen (DE)

(56) Entgegenhaltungen:
- EP-A- 0 031 099
- EP-A- 0 064 250
- EP-A- 0 133 270
- EP-A- 0 584 045
- FR-A- 2 423 517

## Beschreibung

Die vorliegende Erfindung betrifft neue faserreaktive Anthrachinonfarbstoffe, Verfahren zu deren Herstellung und deren Verwendung zum Färben oder Bedrucken von Fasermaterialien.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Infolge dessen besteht weiterhin ein Bedarf nach neuen Reaktivfarbstoffen, welche verbesserte Eigenschaften, insbesondere in bezug auf die Applikation, aufweisen.

Für das Färben werden heute Reaktivfarbstoffe gefordert, die eine ausreichende Substantivität haben und die zugleich eine gute Auswaschbarkeit der nicht fixierten Anteile aufweisen. Sie sollen ferner eine gute färberische Ausbeute aufweisen und hohe Reaktivität besitzen, wobei insbesondere Färbungen mit hohen Fixiergraden geliefert werden sollen. Von den bekannten Farbstoffen werden diese Anforderungen nicht in allen Eigenschaften erfüllt.

Der vorliegenden Erfindung liegt daher die Aufgabe zugrunde, neue, verbesserte Reaktivfarbstoffe für das Färben und Bedrucken von Fasermaterialien zu finden, welche die oben charakterisierten Qualitäten in hohem Masse besitzen. Die neuen Farbstoffe sollten sich vor allem durch hohe Fixierausbeuten und hohe Faser-Farbstoff-Bindungsstabilitäten auszeichnen, und ausserdem sollten die nicht auf der Faser fixierten Anteile leicht auswaschbar sein. Sie sollten ferner Färbungen mit guten Allgemeinechtheiten, beispielsweise Licht- und Nassechtheiten, ergeben.

Es hat sich gezeigt, dass mit den weiter unten definierten neuen reaktiven Farbstoffen die gestellte Aufgabe weitgehend gelöst wird.

Gegenstand der Erfindung sind daher Anthrachinonfarbstoffe der Formel 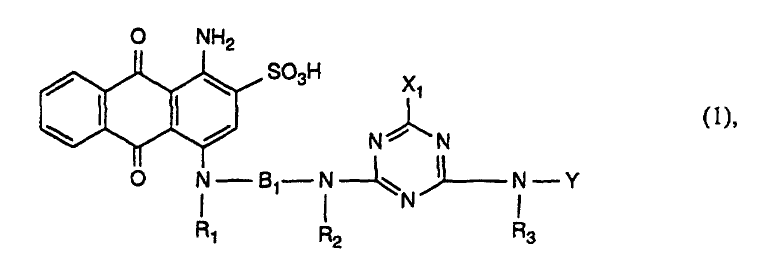 worin
R₁, R₂ und R₃ unabhängig voneinander Wasserstoff oder gegebenenfalls substituiertes C₁-C₁₂-Alkyl bedeuten,
X₁ Chlor oder Fluor ist,
B₁ ein Rest der Formel -CH₂-CH₂-CH(C₂H₅)-, -CH₂-CH(OH)-CH₂- oder
-CH₂-C(CH₃)₂-CH₂- ist,
Y Wasserstoff, gegebenenfalls substituiertes C₁-C₁₂-Alkyl oder
   gegebenenfalls durch C₁-C₄-Alkyl, C₁-C₄-Alkoxy, C₂-C₄-Alkanoylamino, Halogen, Carboxy, Sulfo oder einen Rest der Formel -SO₂-Z substituiertes Phenyl oder Naphthyl ist, wobei
Z eine Gruppe der Formel -CH=CH₂ oder -CH₂-CH₂-U₁ und U₁ eine Abgangsgruppe ist.

Die FR-A-2 423 517 offenbart Farbstoffe, worin der Anthrachinonrest mit dem Triazinrest durch ein aliphatisches Diamin verbrückt ist.

Als C₁-C₁₂-Alkylreste kommen für R₁, R₂, R₃ und Y vorzugsweise C₁-C₁₀-Alkylreste, insbesondere C₁-C₈-Alkylreste, in Betracht. Die genannten Akylreste können mit Ausnahme von Methyl z.B. durch Sauerstoff, vorzugsweise durch 1, 2 oder 3 Glieder -O-, insbesondere durch 1 oder 2 Glieder -O-, unterbrochen sein. Weiterhin können die genannten Alkylreste unsubstituiert oder beispielsweise durch Hydroxyl, Sulfo oder Sulfato, vorzugsweise durch Hydroxyl oder Sulfo, insbesondere durch Hydroxyl, substituiert sein. Der Rest Y kann in der Bedeutung als Alkyl weiterhin durch den Rest eines Anthrachinonfarbstoffes substituiert sein, wie z.B. durch einen Rest der 1,4-Diaminoanthrachinon-2-sulfonsäure, welcher über die in 4-Stellung enthaltene Aminogruppe gebunden ist.

Die für Y genannten Phenyl- und Naphthylreste können unsubstituiert oder durch C₁-C₄-Alkyl, wie Methyl, Äthyl, Propyl, Isopropyl, Butyl, sek.-Butyl, tert.-Butyl oder Isobutyl, insbesondere Methyl, C₁-C₄-Alkoxy, wie Methoxy, Äthoxy, Propoxy, Isopropoxy, Butoxy oder Isobutoxy, insbesondere Methoxy, C₂-C₄-Alkanoylamino, wie z.B. Acetylamino oder Propionylamino, Halogen, wie z.B. Fluor, Chlor oder Brom, insbesondere Chlor, oder durch Sulfo, Carboxy oder einen Rest der Formel -SO₂-Z substituiert sein.

Geeignete Abgangsgruppen U₁ sind z.B. -Cl, -Br, -F, -OSO₃H, -SSO₃H, -OCO-CH₃, -OPO₃H₂, -OCO-CCl₃, -OCO-CHCl₂, -OCO-CH₂Cl, -OSO₂-C₁-C₄-Alkyl, -OSO₂-N(C₁-C₄-Alkyl)₂ oder -OCO-C₆H₅.

Bevorzugt ist U₁ eine Gruppe der Formel -Cl, -OSO₃H, -SSO₃H, -OCO-CH₃, -OCO-C₆H₅ oder -OPO₃H₂, insbesondere -Cl oder -OSO₃H, vorzugsweise -OSO₃H.

R₁ und R₂ sind bevorzugt Wasserstoff oder C₁-C₄-Alkyl, insbesondere Wasserstoff.

R₃ ist bevorzugt Wasserstoff oder gegebenenfalls durch Hydroxyl, Sulfo oder Sulfato substituiertes und mit Ausnahme von Methyl gegebenenfalls durch Sauerstoff unterbrochenes C₁-C₈-Alkyl, vorzugsweise Wasserstoff oder gegebenenfalls durch Hydroxyl substituiertes C₁-C₄-Alkyl und insbesondere Wasserstoff.

Besonders bevorzugt bedeuten R₁ und R₂ Wasserstoff oder C₁-C₄-Alkyl, insbesondere Wasserstoff, und R₃ bedeutet Wasserstoff oder gegebenenfalls durch Hydroxyl, Sulfo oder Sulfato substituiertes und mit Ausnahme von Methyl gegebenenfalls durch Sauerstoff unterbrochenes C₁-C₈-Alkyl, insbesondere Wasserstoff oder gegebenenfalls durch Hydroxyl substituiertes C₁-C₄-Alkyl und vorzugsweise Wasserstoff.

Ganz besonders bevorzugt bedeuten R₁, R₂ und R₃ Wasserstoff.

Als oben genannte Alkylenbrückenglieder kommen für B₁ vorzugsweise solche der Formel -CH₂-CH(OH)-CH₂- oder -CH₂-C(CH₃)₂-CH₂-, insbesondere der Formel -CH₂-C(CH₃)₂-CH₂- in Betracht.

Der Rest Y ist bevorzugt Wasserstoff; gegebenenfalls durch Hydroxyl, Sulfo oder Sulfato substituiertes und mit Ausnahme von Methyl gegebenenfalls durch Sauerstoff unterbrochenes C₁-C₁₂-Alkyl; oder
gegebenenfalls durch C₁-C₄-Alkyl, C₁-C₄-Alkoxy, C₂-C₄-Alkanoylamino, Halogen, Carboxy, Sulfo oder einen Rest der Formel -SO₂-Z substituiertes Phenyl oder Naphthyl,
wobei Z eine Gruppe der Formel -CH=CH₂ oder -CH₂-CH₂-U₁ und U₁ vorzugsweise Chlor oder Sulfato ist; oder
ein Anthrachinonrest der Formel 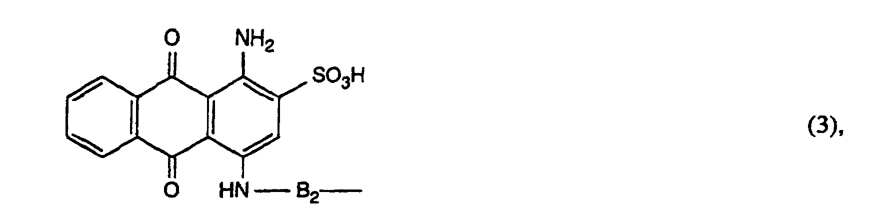
wobei B₂ gegebenenfalls durch Hydroxyl, Sulfo oder Sulfato substituiertes und gegebenenfalls durch Sauerstoff unterbrochenes C₂-C₁₂-Alkylen oder gegebenenfalls im Phenylenring durch C₁-C₄-Alkyl, C₁-C₄-Alkoxy, C₂-C₄-Alkanoylamino, Halogen, Carboxy oder Sulfo substituiertes Methylen-phenylen-methylen bedeutet.

Der Rest B₂ in der Bedeutung als Methylen-phenylen-methylen kann im Phenylenring unsubstituiert oder durch C₁-C₄-Alkyl, wie Methyl, Äthyl, Propyl, Isopropyl, Butyl, sek.-Butyl, tert-Butyl oder Isobutyl, insbesondere Methyl, C₁-C₄-Alkoxy, wie Methoxy, Äthoxy, Propoxy, Isopropoxy, Butoxy oder Isobutoxy, insbesondere Methoxy, C₂-C₄-Alkanoylamino, wie z.B. Acetylamino oder Propionylamino, Halogen, wie z.B. Fluor, Chlor oder Brom, insbesondere Chlor, Sulfo oder Carboxy substituiert sein, vorzugsweise ist der Methylen-phenylen-methylenrest unsubstituiert oder im Phenylenring durch C₁-C₄-Alkyl, C₁-C₄-Alkoxy, Halogen oder Sulfo substituiert. Von besonderem Interesse sind die entsprechenden unsubstituierten Reste.

B₂ in der Bedeutung als Methylen-phenylen-methylenrest ist bevorzugt ein Rest der Formel 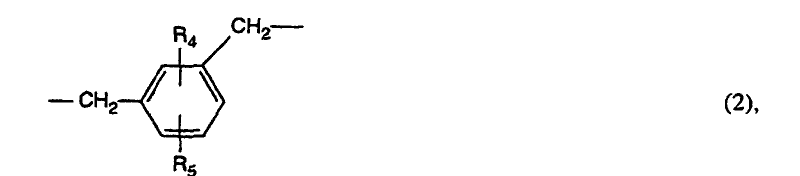 worin R₄ und R₅ unabhängig voneinander Wasserstoff, C₁-C₄-Alkyl, C₁-C₄-Alkoxy, C₂-C₄-Alkanoylamino, Halogen, Carboxy oder Sulfo, insbesondere Wasserstoff, C₁-C₄-Alkyl, C₁-C₄-Alkoxy, Halogen oder Sulfo, vorzugsweise Wasserstoff, bedeuten.

Als oben genannte Alkylenbrückenglieder kommen für B₂ vorzugsweise solche der Formel -(CH₂)₃-CH(CH₃)-CH₂-, -CH₂-CH(OH)-CH₂- oder -CH₂-C(CH₃)₂-CH₂-, insbesondere solche der Formel -(CH₂)₃-CH(CH₃)-CH₂- oder -CH₂-C(CH₃)₂-CH₂- in Betracht. Von besonderer Bedeutung ist der Rest der Formel -CH₂-C(CH₃)₂-CH₂-.

Bevorzugt ist B₂ ein gegebenenfalls wie oben angegeben substituierter Methylen-phenylen-methylenrest oder ein Rest der Formel -(CH₂)₃-CH(CH₃)-CH₂- oder insbesondere -CH₂-C(CH₃)₂-CH₂-, wobei für den Methylen-phenylen-methylenrest die oben angegebenen Bedeutungen und Bevorzugungen gelten.

Besonders bevorzugt bedeutet B₂ Methylen-phenylen-methylen oder einen Rest der Formel -CH₂-C(CH₃)₂-CH₂-.

Ganz besonders bevorzugt ist B₂ ein Rest der Formel -CH₂-C(CH₃)₂-CH₂-.

Von besonderem Interesse als Reste Y sind die oben genannten Phenyl- und Naphthylreste.

Besonders bevorzugt ist Y gegebenenfalls durch C₁-C₄-Alkyl, C₁-C₄-Alkoxy, Halogen, Sulfo oder einen Rest der Formel -SO₂-Z substituiertes Phenyl oder Naphthyl. Hierbei ist Z insbesondere eine Gruppe der Formel -CH=CH₂ oder -CH₂-CH₂-U₁ und U₁ Chlor oder Sulfato.

Ganz besonders bevorzugt ist Y durch Sulfo substituiertes Naphthyl oder insbesondere gegebenenfalls durch C₁-C₄-Alkyl, C₁-C₄-Alkoxy, Halogen, Sulfo oder einen Rest der Formel -SO₂-Z, vorzugsweise durch Sulfo, substituiertes Phenyl. Hierbei ist Z insbesondere eine Gruppe der Formel -CH=CH₂ oder -CH₂-CH₂-U₁ und U₁ Chlor oder Sulfato.

Bevorzugt als Anthrachinonfarbstoffe der Formel (1) sind solche der Formeln 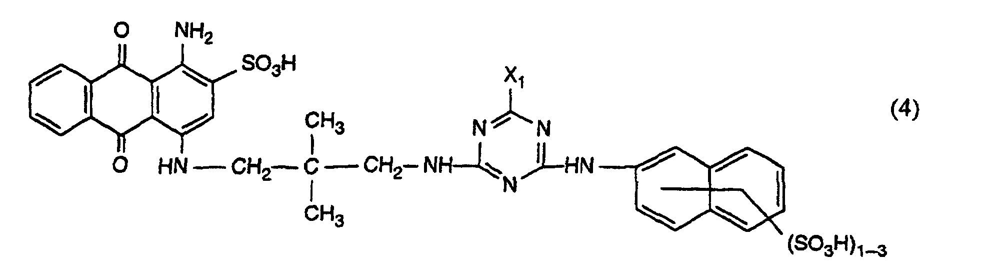 und 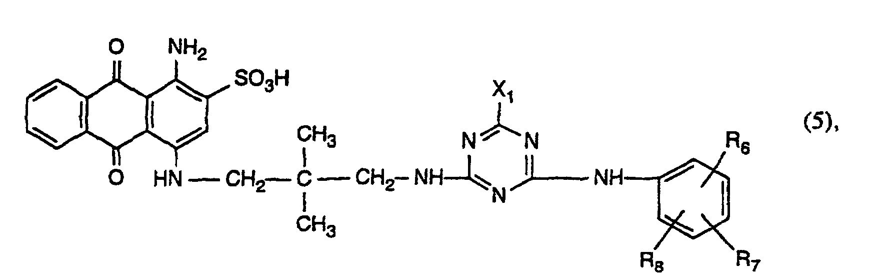 worin R₆, R₇ und R₈ unabhängig voneinander Wasserstoff, C₁-C₄-Alkyl, C₁-C₄-Alkoxy, Halogen, Sulfo oder einen Rest der Formel -SO₂-Z bedeuten, wobei
für Z die oben angegebenen Bedeutungen und Bevorzugungen gelten. Vorzugsweise ist Z eine Gruppe der Formel -CH=CH₂ oder -CH₂-CH₂-U₁, worin U₁ Chlor oder Sulfato ist.

R₆, R₇ und R₈ sind bevorzugt unabhängig voneinander Wasserstoff oder Sulfo. Besonders bevorzugt bedeuten R₆ und R₇ Sulfo und R₈ Wasserstoff.

Von besonderem Interesse ist der Farbstoff der Formel (5), wobei für R₆, R₇ und R₈ die oben angegebenen Bedeutungen und Bevorzugungen gelten.

Einen weiteren Gegenstand der vorliegenden Erfindung stellt ein Verfahren zur Herstellung von Anthrachinonfarbstoffen der Formel (1) dar, welches dadurch gekennzeichnet ist, dass man eine Anthrachinonverbindung der Formel 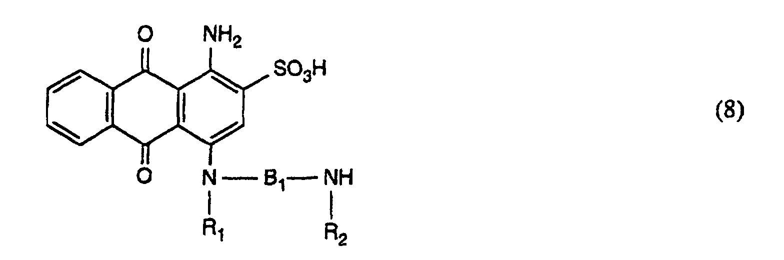 mit einer Verbindung der Formel 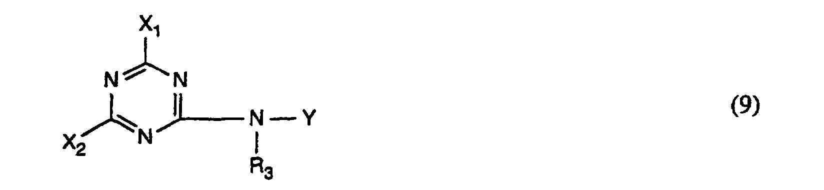 kondensiert und gegebenenfalls eine Umwandlungsreaktion anschliesst, wobei X₂ Chlor oder Fluor bedeutet und für R₁, R₂, R₃, X₁, B₁ und Y die oben angegebenen Bedeutungen und Bevorzugungen gelten.

Als Umwandlungsreaktionen können z.B. Eliminierungsreaktionen an die Synthese angeschlossen werden. Beispielsweise kann man Anthrachinonfarbstoffe der Formel (1), welche Sulfatoäthylsulfonylreste enthalten, mit einer Base, wie z.B. Natriumhydroxid, behandeln, wobei die Sulfatoäthylsulfonylreste in Vinylsulfonylreste übergehen.

Grundsätzlich lassen sich die Anthrachinonfarbstoffe der Formel (1) herstellen, indem man von Vorprodukten oder Zwischenprodukten für Farbstoffe, die faserreaktive Reste enthalten, ausgeht, oder diese faserreaktiven Reste in hierfür geeignete Zwischenprodukte mit Farbstoffcharakter einführt.

Die Verbindungen der Formeln (8) und (9) sind bekannt oder können in Analogie zu bekannten Verbindungen erhalten werden.

Die einzelnen Kondensationsreaktionen erfolgen z.B. gemäss an sich bekannter Verfahren, in der Regel in wässriger Lösung, bei einer Temperatur von beispielsweise 0 bis 50°C, insbesondere 0 bis 10°C, und einem pH-Wert von z.B. 4 bis 10.

Die erfindungsgemässen Farbstoffe der Formel (1) liegen entweder in der Form ihrer freien Säure oder vorzugsweise als deren Salze vor. Als Salze kommen beispielsweise die Alkali-, Erdalkali- oder Ammoniumsalze oder die Salze eines organischen Amins in Betracht. Als Beispiele seien die Natrium-, Lithium-, Kalium- oder Ammoniumsalze oder das Salz des Mono-, Di- oder Triäthanolamins genannt.

Die erfindungsgemässen Farbstoffe eignen sich zum Färben und Bedrucken der verschiedensten Materialien, wie hydroxylgruppenhaltigen oder stickstoffhaltigen Fasermaterialien. Als Beispiele seien Seide, Leder, Wolle, Polyamidfasern und Polyurethane, und insbesondere cellulosehaltige Fasermaterialien aller Art genannt. Solche cellulosehaltige Fasermaterialien sind beispielsweise die natürlichen Cellulosefasern, wie Baumwolle, Leinen und Hanf, sowie Zellstoff und regenerierte Cellulose. Die erfindungsgemässen Farbstoffe sind auch zum Färben oder Bedrucken von hydroxylgruppenhaltigen Fasern geeignet, die in Mischgeweben enthalten sind, z.B. von Gemischen aus Baumwolle mit Polyesterfasern oder Polyamidfasern. Besonders geeignet sind die erfindungsgemässen Farbstoffe zum Färben oder Bedrucken von cellulosehaltigen Fasermaterialien. Weiterhin können sie zum Färben oder Bedrucken von natürlichen oder synthetischen Polyamidfasermaterialien, insbesondere von Wolle oder synthetischen Polyamidfasermaterialien, verwendet werden.

Die erfindungsgemässen Farbstoffe lassen sich auf verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulard-Färbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung, fixiert werden. Besonders geeignet sind sie für das sogenannte Kaltverweilverfahren, wonach der Farbstoff zusammen mit dem Alkali auf dem Foulard aufgebracht wird und danach durch mehrstündiges Lagern bei Raumtemperatur fixiert wird. Nach dem Fixieren werden die Färbungen oder Drucke mit kaltem und heissem Wasser, gegebenenfalls unter Zusatz eines dispergierend wirkenden und die Diffusion der nicht fixierten Anteile fördernden Mittels gründlich gespült.

Die erfindungsgemässen Farbstoffe zeichnen sich durch hohe Reaktivität, gutes Fixiervermögen und ein sehr gutes Aufbauvermögen aus. Sie können daher nach dem Ausziehfärbeverfahren bei niedrigen Färbetemperaturen eingesetzt werden und erfordern beim Pad-Steam-Verfahren nur kurze Dämpfzeiten. Die Fixiergrade sind hoch und die nicht fixierten Anteile können leicht ausgewaschen werden, wobei die Differenz zwischen Ausziehgrad und Fixiergrad bemerkenswert klein, d.h. der Seifverlust sehr gering ist. Die erfindungsgemässen Farbstoffe eignen sich auch besonders zum Druck, vor allem auf Baumwolle, ebenso aber auch zum Bedrucken von stickstoffhaltigen Fasern, z.B. von Wolle oder Seide oder von Mischgeweben, die Wolle oder Seide enthalten.

Die mit den erfindungsgemässen Farbstoffen hergestellten Färbungen und Drucke besitzen eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Ueberfärbe- und Schweissechtheiten, sowie eine gute Plissierechtheit, Bügelechtheit und Reibechtheit.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

Beispiel 1: In 50 Teilen Wasser werden unter Zugabe eines Netzmittels und 5 Teilen Dinatriumhydrogenphosphat bei einer Temperatur von 0°C 19 Teile Cyanurchlorid kräftig verrührt. Dazu tropft man eine neutrale Lösung von 17 Teilen 2-Aminobenzolsulfonsäure in 170 Teilen Wasser. Hierbei wird der pH durch Zugabe von Natronlauge konstant bei einem Wert von 4,5 gehalten. Nach beendeter Reaktion tropft man eine Lösung von 38 Teilen einer Anthrachinonverbindung der Formel 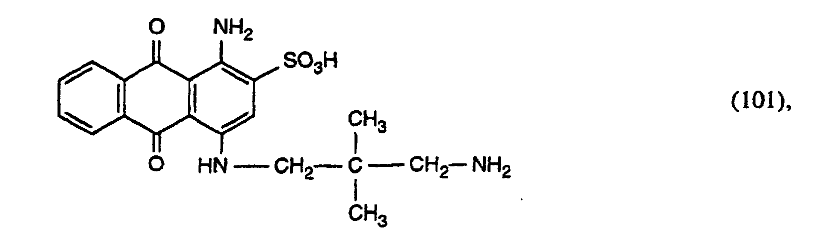 gelöst mit 4 Teilen Lithiumhydroxidmonohydrat in 380 Teilen Wasser, derart zu, dass der pH einen Wert von 10 nicht überschreitet. Anschliessend wird bis zum Ende der Reaktion der pH bei einem Wert von 9,5 gehalten. Durch Zugabe von Natriumchlorid wird der Farbstoff abgeschieden, abfiltriert, mit wässriger Natriumchloridlösung gewaschen und getrocknet. Man erhält einen Farbstoff, der in Form der freien Säure der Verbindung der Formel 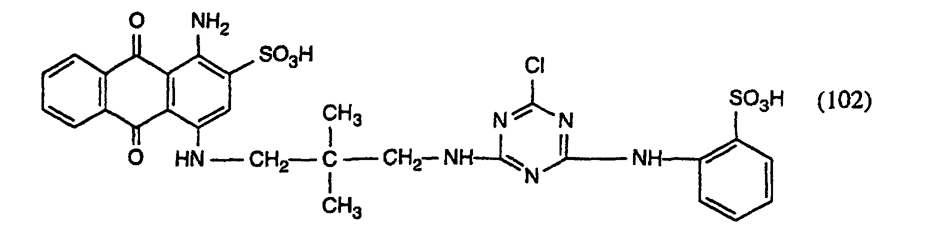 entspricht. Der Farbstoff der Formel (102) färbt Baumwolle und Wolle in blauen Farbtönen.

Beispiele 2 bis 34: Verfährt man wie in Beispiel 1 angegeben, verwendet jedoch anstelle von 17 Teilen 2-Aminobenzolsulfonsäure eine äquimolare Menge eines Amins der Formel H-V₁, und
anstelle von 38 Teilen einer Anthrachinonverbindung der Formel (101) eine äquimolare Menge einer Anthrachinonverbindung der Formel 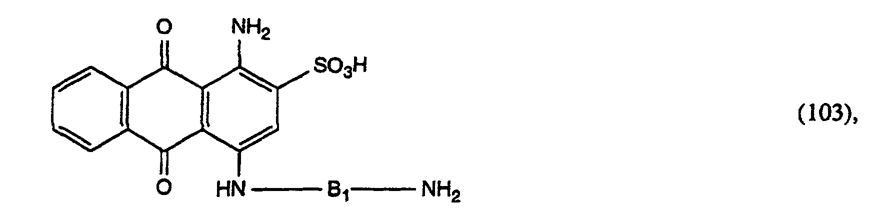 so erhält man die in der folgenden Tabelle 1 angegebenen Farbstoffe der allgemeinen Formel 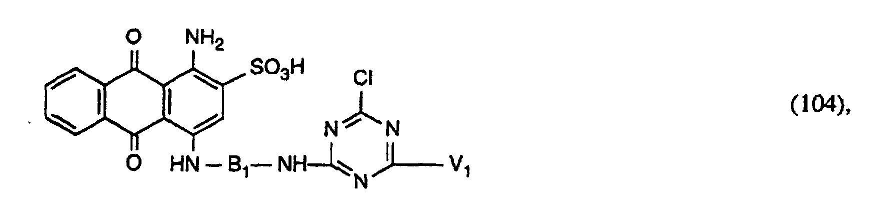 wobei B₁ und V₁ jeweils die in der folgenden Tabelle 1 angegebenen Bedeutungen haben.

Die in Tabelle 1 angegebenen Farbstoffe färben Baumwolle und Wolle in blauen Farbtönen.

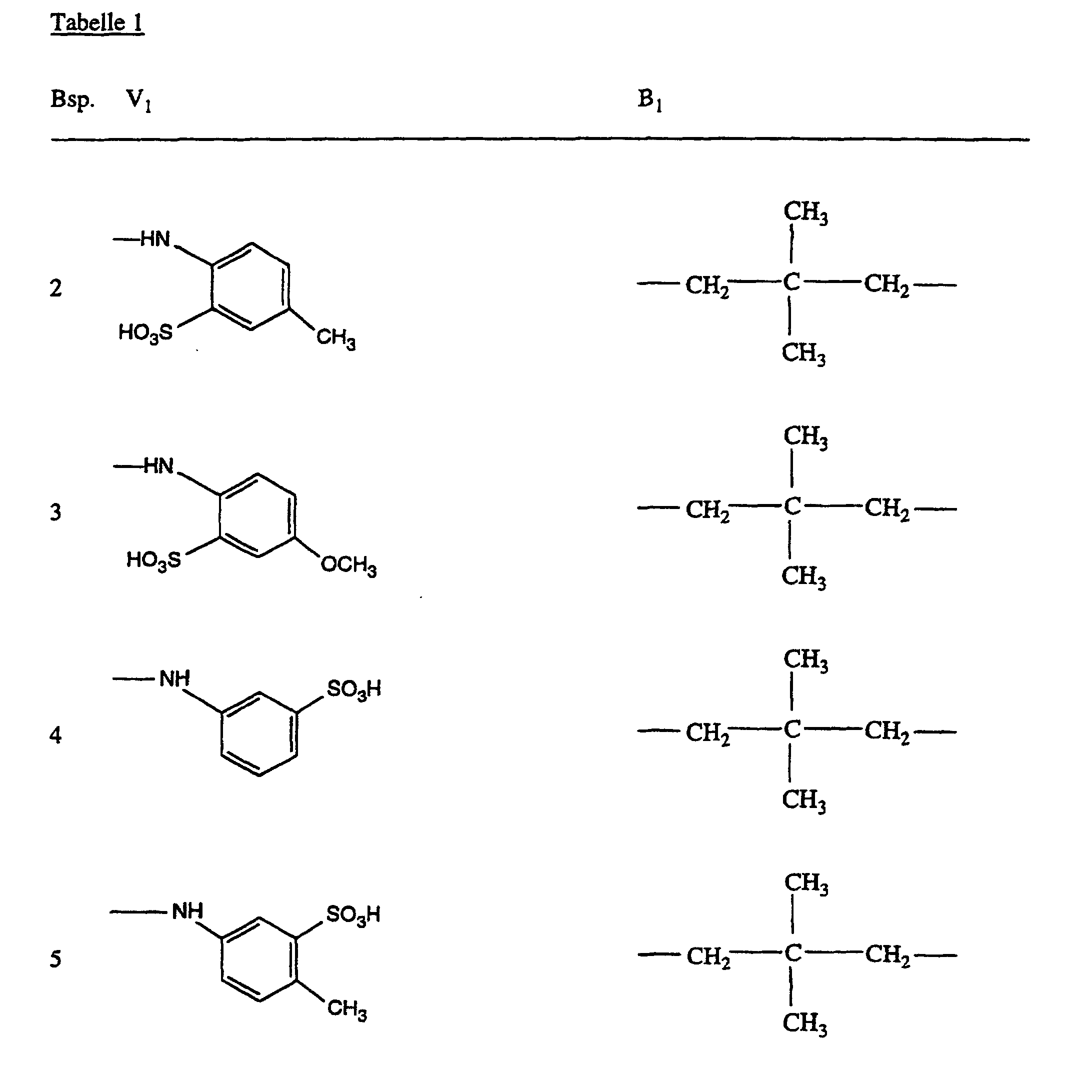

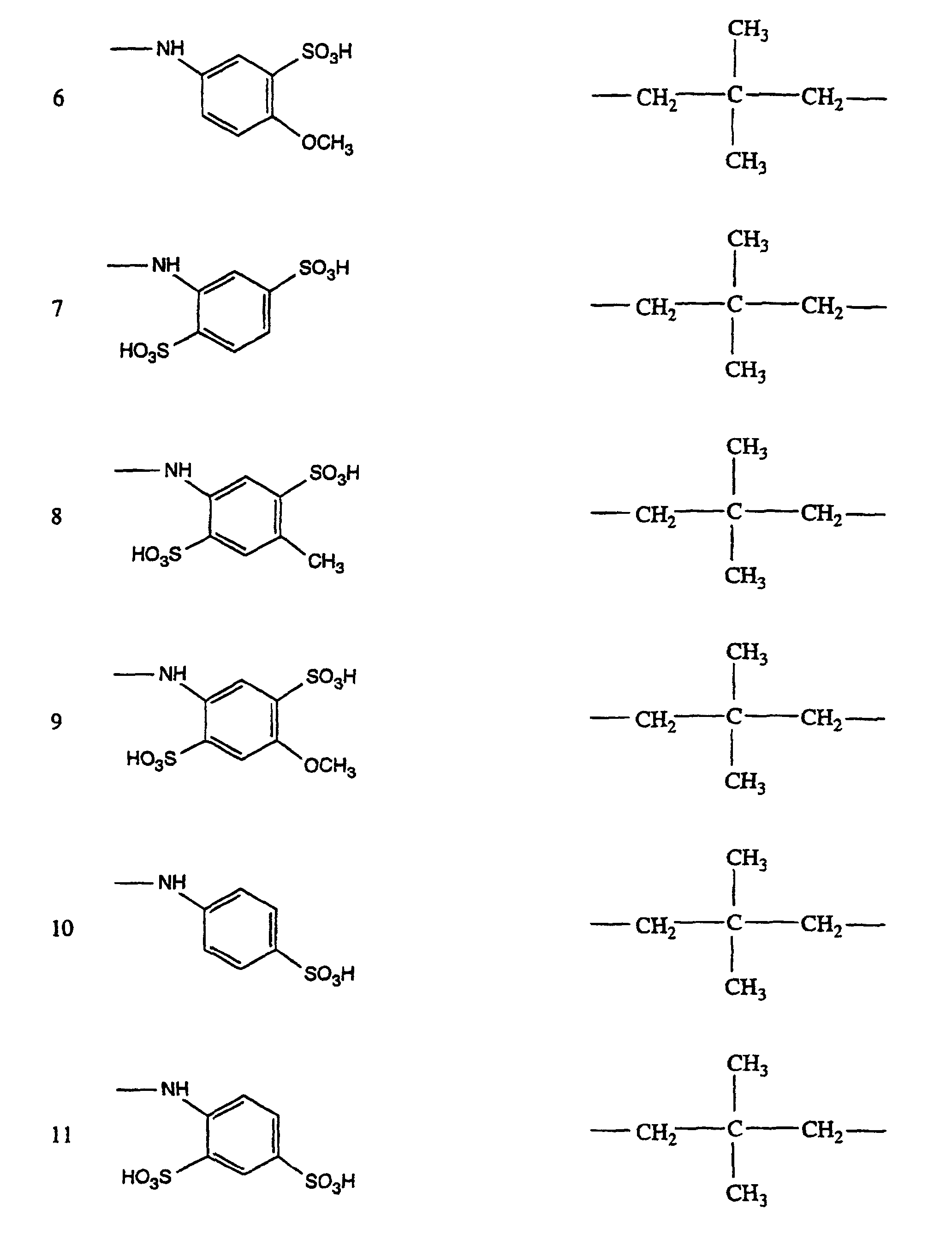

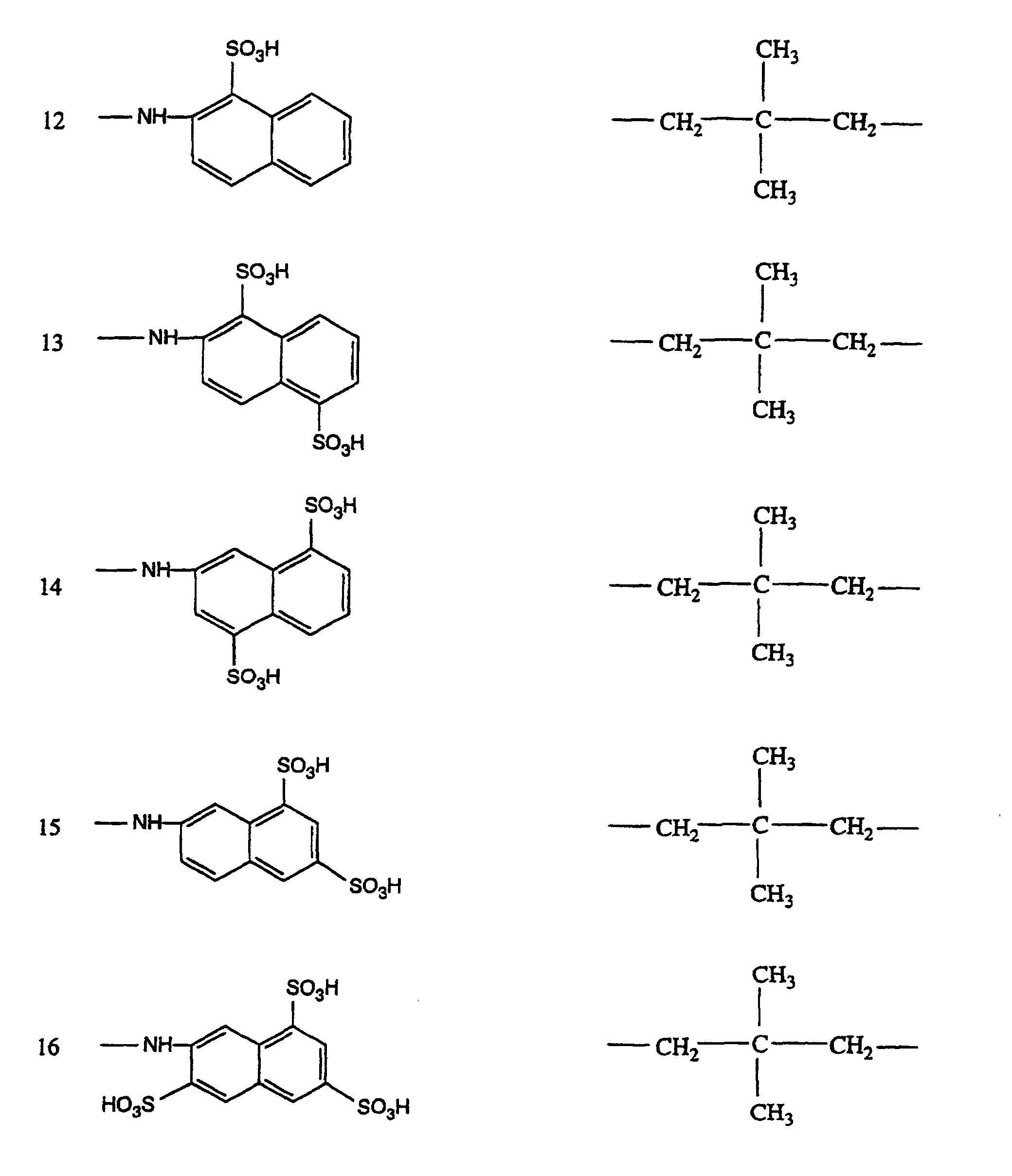

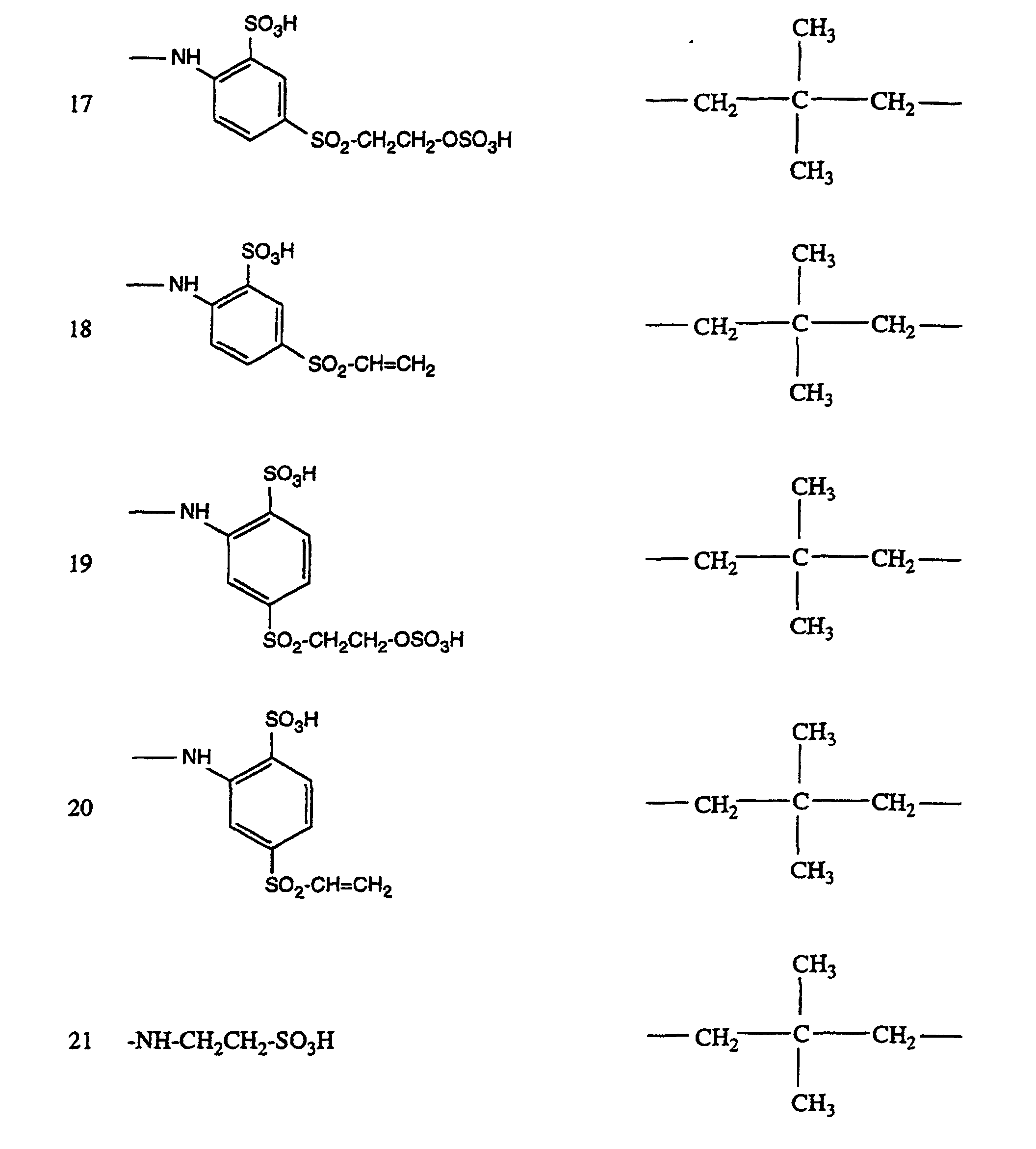

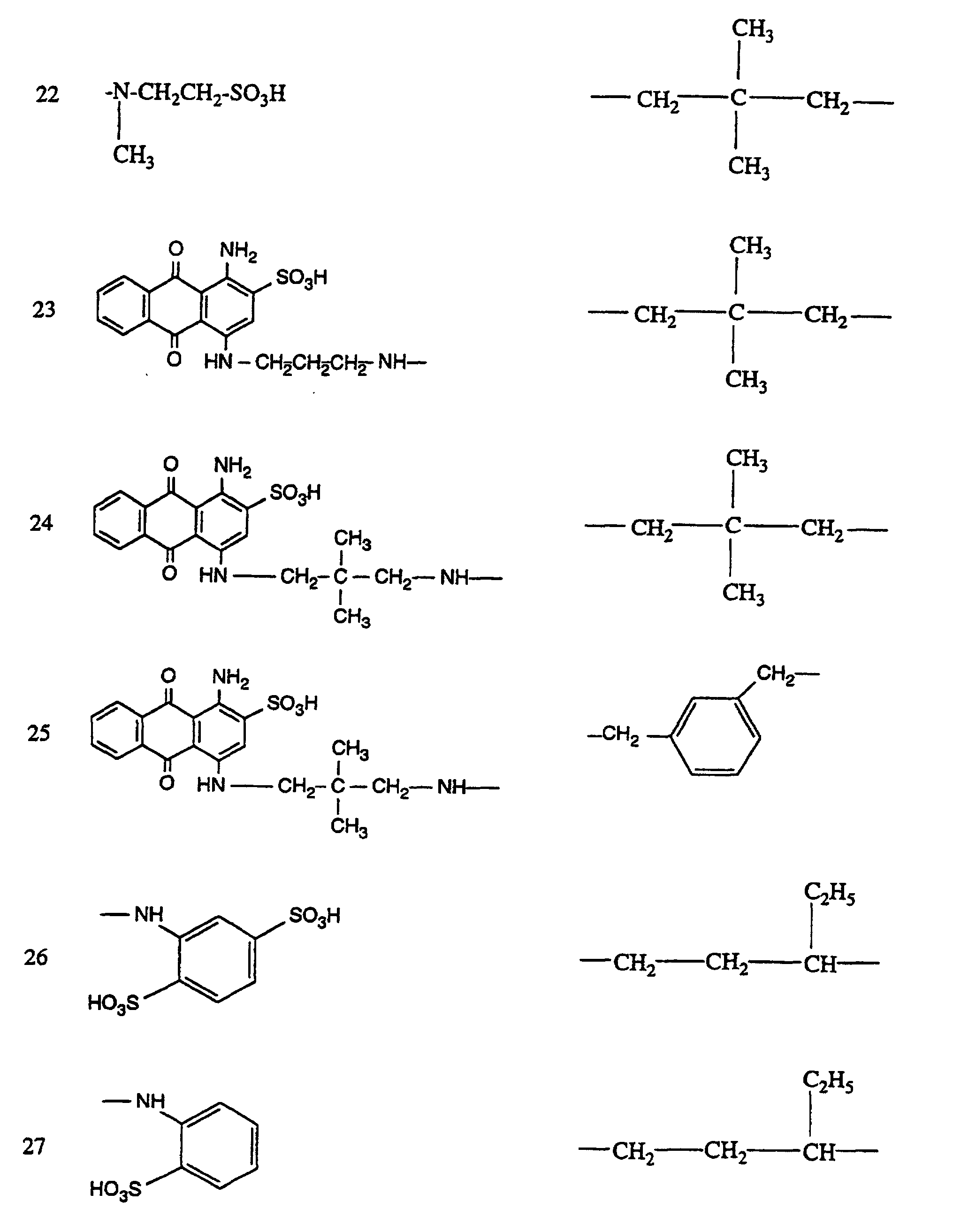

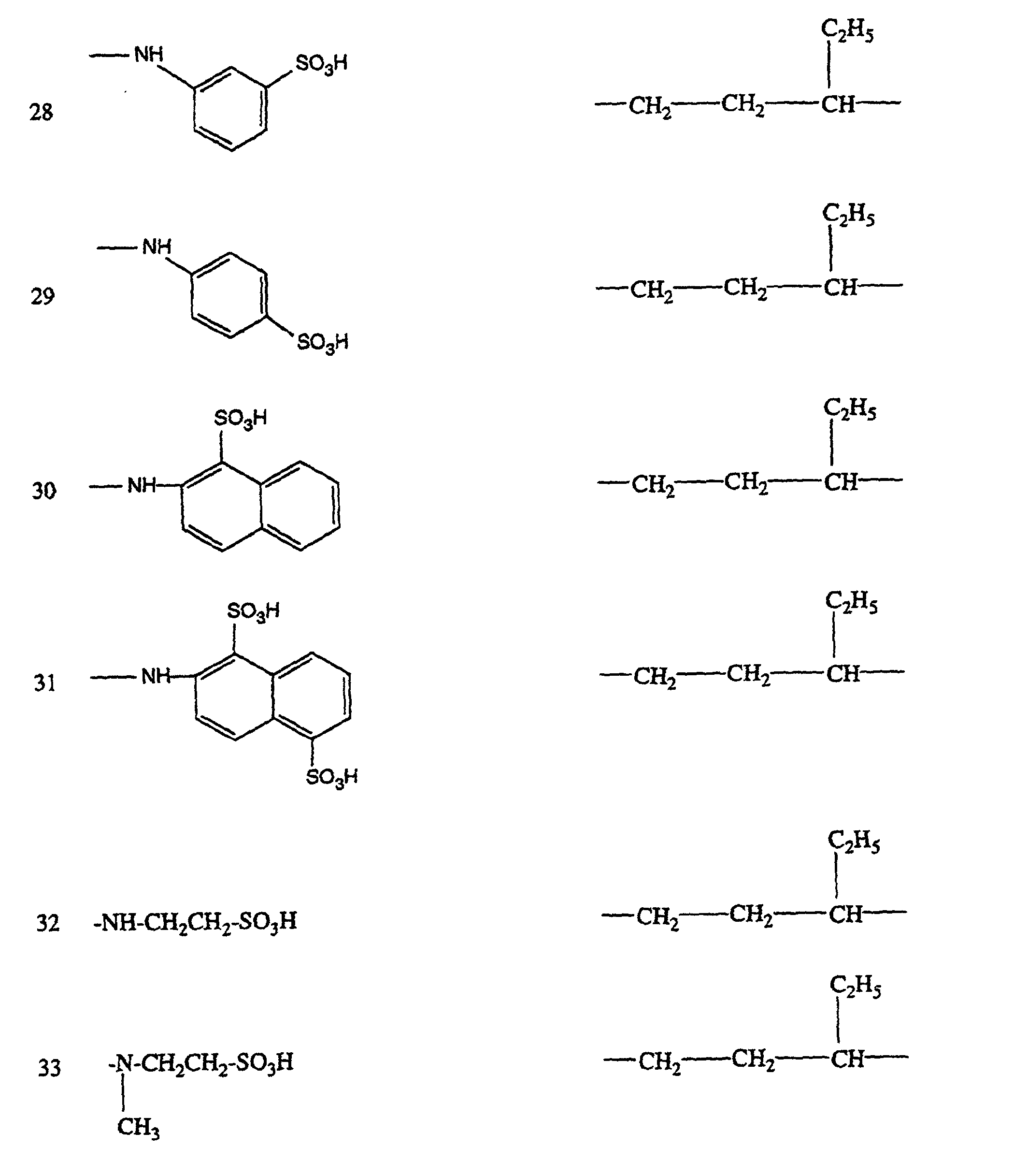

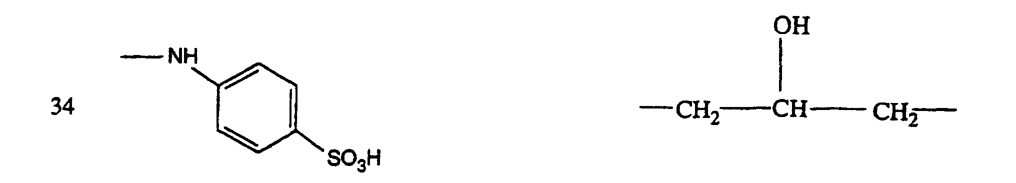

Beispiel 35: In eine Lösung von 17 Teilen 2-Aminobenzolsulfonsäure, mit Natronlauge neutral gelöst in 150 Teilen Wasser und gepuffert mit 5 Teilen Dinatriumhydrogenphosphat, tropft man bei einer Temperatur von 0°C 13 Teile Cyanurfluorid zu. Hierbei wird der pH durch Zugabe von Natronlauge konstant bei einem Wert von 7 gehalten. Nach beendeter Reaktion tropft man eine Lösung von 38 Teilen einer Anthrachinonverbindung der Formel 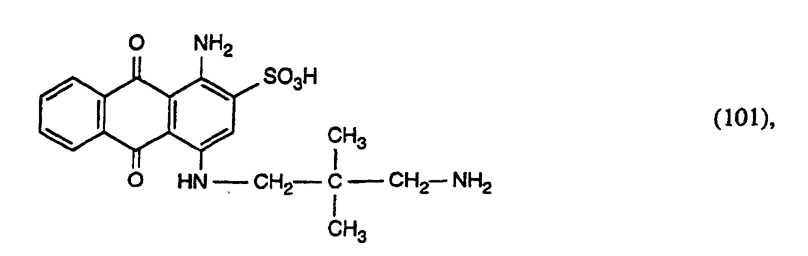 gelöst mit 4 Teilen Lithiumhydroxidmonohydrat in 380 Teilen Wasser, derart zu, dass der pH einen Wert von 10 nicht überschreitet Anschliessend wird bis zum Ende der Reaktion der pH bei einem Wert von 9,5 gehalten. Durch Zugabe von Natriumchlorid wird der Farbstoff abgeschieden, abfiltriert, mit wässriger Natriumchloridlösung gewaschen und getrocknet. Man erhält einen Farbstoff, der in Form der freien Säure der Verbindung der Formel 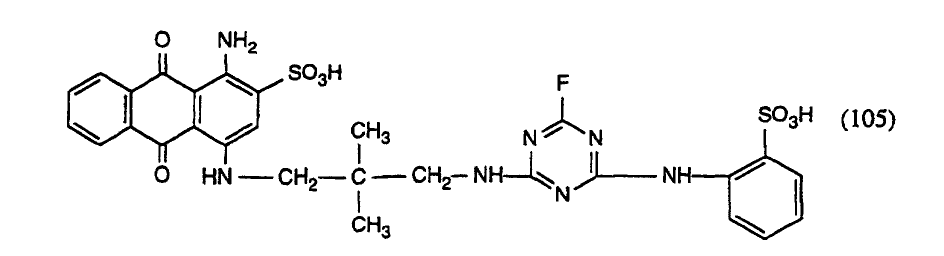 entspricht. Der Farbstoff der Formel (105) färbt Baumwolle und Wolle in blauen Farbtönen.

Verfährt man wie in Beispiel 35 angegeben, verwendet jedoch anstelle von 17 Teilen 2-Aminobenzolsulfonsäure eine äquimolare Menge eines Amins der Formel H-V₁, und
anstelle von 38 Teilen einer Anthrachinonverbindung der Formel (101) eine äquimolare Menge einer Anthrachinonverbindung der Formel 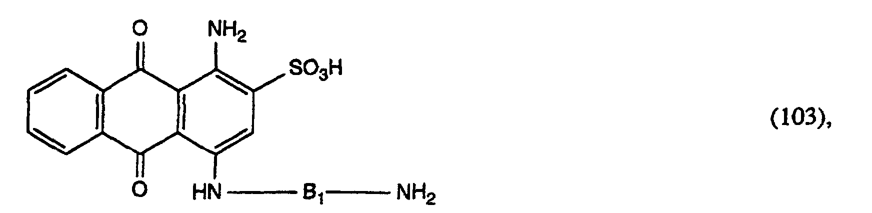 wobei B₁ und V₁ jeweils die in den Beispielen 2 bis 34 der Tabelle 1 angegebenen Bedeutungen haben, so erhält man Farbstoffe der allgemeinen Formel 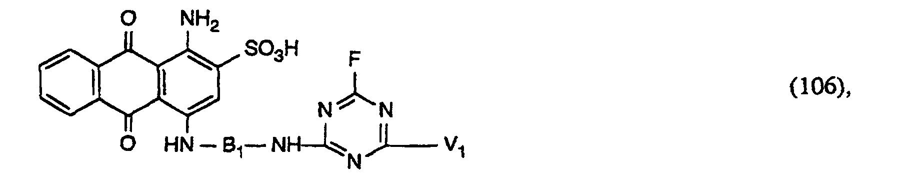 worin B₁ und V₁ jeweils die in den Beispielen 2 bis 34 der Tabelle 1 angegebenen Bedeutungen haben, und welche Baumwolle und Wolle in blauen Farbtönen färben.

In den Beispielen, worin ein eine β-Sulfatoäthylsulfonylgruppe enthaltendes Produkt mit einer Anthrachinonverbindung umgesetzt wird, erfolgt diese Umsetzung in verdünnterem Medium bei einem pH-Wert von ca. 8,5.

### Färbevorschrift

2 Teile des gemäss Beispiel 1 erhaltenen Reaktivfarbstoffes werden in 400 Teilen Wasser gelöst; dazu gibt man 1500 Teile einer Lösung, die pro Liter 53 g Natriumchlorid enthält. In dieses Färbebad geht man bei 40°C mit 100 Teilen Baumwollgewebe ein. Nach 45 Minuten werden 100 Teile einer Lösung, die pro Liter 16 g Natriumhydroxyd und 20 g kalziniertes Soda enthält, zugegeben. Die Temperatur des Färbebades wird weitere 45 Minuten bei 40°C gehalten. Danach wird die gefärbte Ware gespült, während einer Viertelstunde mit einem nichtionogenen Waschmittel kochend geseift, nochmals gespült und getrocknet.

### Druckvorschrift

3 Teile des gemäss Beispiel 1 erhaltenen Reaktivfarbstoffes werden unter schnellem Rühren in 100 Teile einer Stammverdickung, enthaltend 50 Teile 5%ige Natriumalginatverdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102°C in gesättigtem Dampf. Das bedruckte Gewebe wird dann gespült, gegebenenfalls kochend geseift und nochmals gespült, und anschliessend getrocknet.

## Patentansprüche

1. Anthrachinonfarbstoffe der Formel 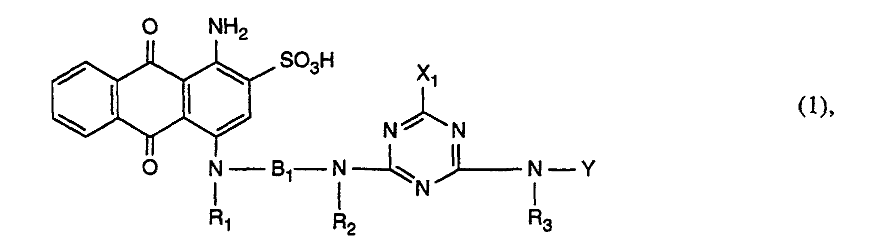 worin
R₁, R₂ und R₃ unabhängig voneinander Wasserstoff oder gegebenenfalls substituiertes C₁-C₁₂-Alkyl bedeuten,
X₁ Chlor oder Fluor ist,
B₁ ein Rest der Formel -CH₂-CH₂-CH(C₂H₅)-, -CH₂-CH(OH)-CH₂- oder -CH₂-C(CH₃)₂-CH₂-ist,
Y Wasserstoff, gegebenenfalls substituiertes C₁-C₁₂-Alkyl oder
gegebenenfalls durch C₁-C₄-Alkyl, C₁-C₄-Alkoxy, C₂-C₄-Alkanoylamino, Halogen, Carboxy, Sulfo oder einen Rest der Formel -SO₂-Z substituiertes Phenyl oder Naphthyl ist, wobei
Z eine Gruppe der Formel -CH=CH₂ oder -CH₂-CH₂-U₁ und U₁ eine Abgangsgruppe ist.

2. Anthrachinonfarbstoffe gemäss Anspruch 1, worin
R₁ und R₂ Wasserstoff oder C₁-C₄-Alkyl sind und
R₃ Wasserstoff oder gegebenenfalls durch Hydroxyl, Sulfo oder Sulfato substituiertes und mit Ausnahme von Methyl gegebenenfalls durch Sauerstoff unterbrochenes C₁-C₈-Alkyl ist.

3. Anthrachinonfarbstoffe gemäss einem der Ansprüche 1 und 2, worin R₁, R₂ und R₃ Wasserstoff sind.

4. Anthrachinonfarbstoffe gemäss einem der Ansprüche 1 bis 3, worin
Y Wasserstoff; gegebenenfalls durch Hydroxyl, Sulfo oder Sulfato substituiertes und mit Ausnahme von Methyl gegebenenfalls durch Sauerstoff unterbrochenes C₁-C₁₂-Alkyl; oder
gegebenenfalls durch C₁-C₄-Alkyl, C₁-C₄-Alkoxy, C₂-C₄-Alkanoylamino, Halogen, Carboxy, Sulfo oder einen Rest der Formel -SO₂-Z substituiertes Phenyl oder Naphthyl ist, wobei Z eine Gruppe der Formel -CH=CH₂ oder -CH₂-CH₂-U₁ und U₁ Chlor oder Sulfato ist; oder
ein Anthrachinonrest der Formel 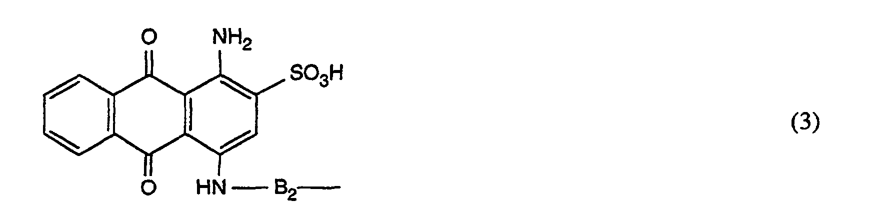 ist, wobei B₂ gegebenenfalls durch Hydroxyl, Sulfo oder Sulfato substituiertes und gegebenenfalls durch Sauerstoff unterbrochenes C₂-C₁₂-Alkylen oder gegebenenfalls im Phenylenring durch C₁-C₄-Alkyl, C₁-C₄-Alkoxy, C₂-C₄-Alkanoylamino, Halogen, Carboxy oder Sulfo substituiertes Methylen-phenylen-methylen bedeutet.

5. Anthrachinonfarbstoffe gemäss einem der Ansprüche 1 bis 4, worin
Y gegebenenfalls durch C₁-C₄-Alkyl, C₁-C₄-Alkoxy, Halogen, Sulfo oder einen Rest der Formel -SO₂-Z substituiertes Phenyl oder Naphthyl ist, wobei Z eine Gruppe der Formel -CH=CH₂ oder -CH₂-CH₂-U₁ und U₁ Chlor oder Sulfato bedeutet.

6. Anthrachinonfarbstoffe gemäss einem der Ansprüche 1 bis 5, worin
B₁ ein Rest der Formel -CH₂-C(CH₃)₂-CH₂- ist.

7. Anthrachinonfarbstoffe gemäss Anspruch 1, der Formel 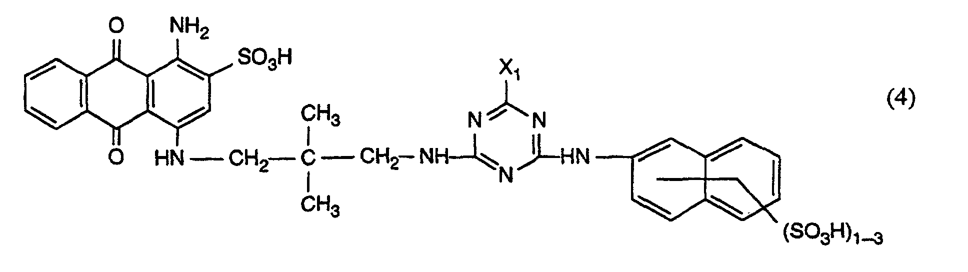 oder 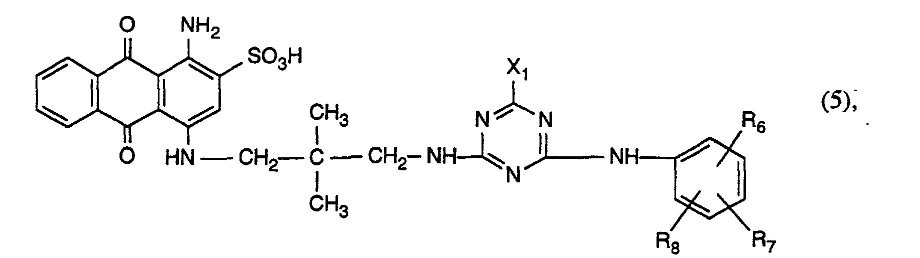 worin R₆, R₇ und R₈ unabhängig voneinander Wasserstoff, C₁-C₄-Alkyl, C₁-C₄-Alkoxy, Halogen, Sulfo oder einen Rest der Formel -SO₂-Z bedeuten, wobei
Z eine Gruppe der Formel -CH=CH₂ oder -CH₂-CH₂-U₁ und U₁ Chlor oder Sulfato ist.

8. Anthrachinonfarbstoffe gemäss Anspruch 7 der Formel (5), worin
R₆, R₇ und R₈ unabhängig voneinander Wasserstoff oder Sulfo bedeuten.

9. Verfahren zur Herstellung von Anthrachinonfarbstoffen gemäss Anspruch 1, dadurch gekennzeichnet, dass man eine Anthrachinonverbindung der Formel 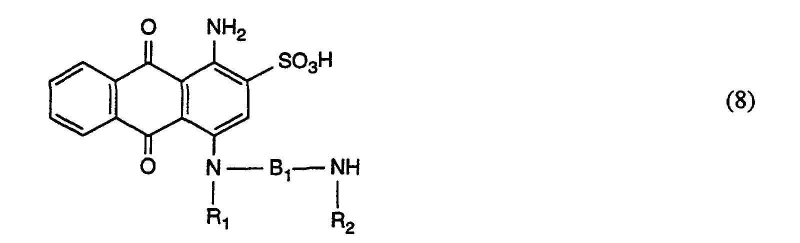 mit einer Verbindung der Formel 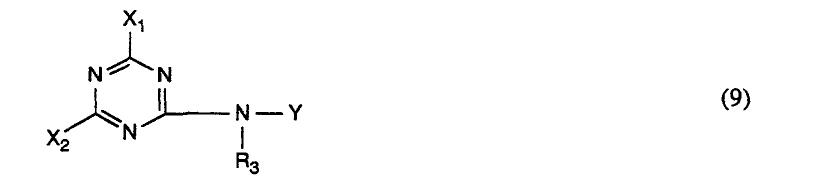 kondensiert und gegebenenfalls eine Umwandlungsreaktion anschliesst, wobei X₂ Chlor oder Fluor bedeutet und R₁, R₂, R₃, X₁, B₁ und Y die in Anspruch 1 angegebenen Bedeutungen haben.

10. Verwendung der Anthrachinonfarbstoffe gemäss einem der Ansprüche 1 bis 8 bzw. der gemäss Anspruch 9 erhaltenen Anthrachinonfarbstoffe zum Färben oder Bedrucken von hydroxylgruppenhaltigen oder stickstoffhaltigen Fasermaterialien.

11. Verwendung gemäss Anspruch 10 zum Färben oder Bedrucken von cellulosehaltigen Fasermaterialien oder natürlichen oder synthetischen Polyamidfasermaterialien.

## Revendications

1. Colorant d'anthraquinone de formule 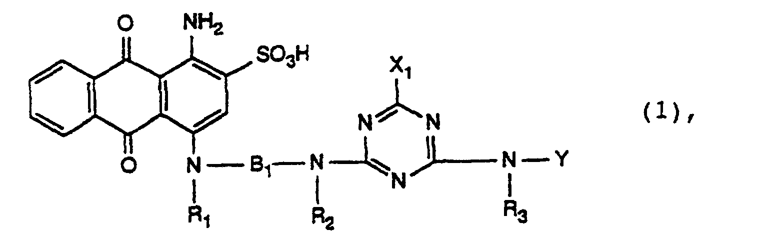 où
R₁, R₂ et R₃ représentent, indépendamment l'un de l'autre, des atomes d'hydrogène ou des groupes alkyle en C₁-C₁₂ éventuellement substitué,
X₁ représente un atome de chlore ou de fluor,
B₁ représente un reste de formule -CE₂-CH₂-CH(C₂H₅)-, -CH₂-CH(OH)-CH₂- ou -CH₂-C(CH₃)₂-CH₂-,
Y représente un atome d'hydrogène, un groupe alkyle en C₁-C₁₂ éventuellement substitué, ou un groupe naphtyle ou phényle éventuellement substitué par des substituants alkyle en C₁-C₄, alkoxy en C₁-C₄, (alcanoyl en C₂-C₄)amino, halogène, carboxy, sulfo ou un reste de formule -SO₂-Z,
z représentant un groupe de formule -CH=CH₂ ou -CH₂-CH₂-U₁ et U₁ est un groupe partant.

2. Colorants d'anthraquinone selon la revendication 1, où
R₁ et R₂ représentent un atome d'hydrogène ou un groupe alkyle en C₁-C₄ et
R₃ représente un atome d'hydrogène ou un groupe alkyle en C₁-C₈ éventuellement substitué par des substituants hydroxyle, sulfo ou sulfato et, à l'exception du groupe méthyle, éventuellement interrompu par des atomes d'oxygène.

3. Colorants d'anthraquinone selon l'une des revendications 1 et 2, où R₁, R₂ et R₃ représentent des atomes d'hydrogène.

4. Colorants d'anthraquinone selon l'une des revendications 1 à 3, où
Y représente un atome d'hydrogène ; un groupe alkyle en C₁-C₁₂ éventuellement substitué par des substituants hydroxyle, sulfo ou sulfato et éventuellement interrompu, à l'exception du groupe méthyle, par des atomes d'oxygène ; un groupe phényle ou naphtyle éventuellement substitué par des substituants alkyle en C₁-C₄, alkoxy en C₁-C₄, (alcanoyl en C₂-C₄)amino, halogène, carboxy, sulfo ou un reste de formule -SO₂-Z, Z représentant un groupe de formule -CH=CH₂ ou -CH₂-CH₂-U₁ et U₁ représente un atome de chlore ou un groupe sulfato ; ou
un reste anthraquinone de formule 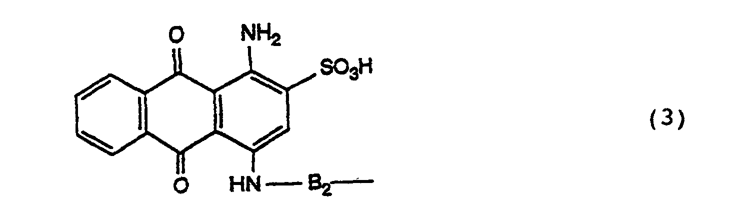 où
B₂ représente un groupe alkylène en C₂-C₁₂ éventuellement substitué par des substituants hydroxyle, sulfo ou sulfato et éventuellement interrompu par des atomes d'oxygène ou un reste méthylène-phénylène-méthylène éventuellement substitué dans le cycle phénylène par des substituants alkyle en C₁-C₄, alkoxy en C₁-C₄, (alcanoyl en C₂-C₄)amino, halogène, carboxy ou sulfo.

5. Colorants d'anthraquinone selon l'une des revendications 1 à 4, où
Y représente un groupe phényle ou naphtyle éventuellement substitué par des substituants alkyle en C₁-C₄, alkoxy en C₁-C₄, halogène, sulfo ou un reste de formule -SO₂-Z, Z représentant un groupe de formule -CH=CH₂ ou -CH₂-CH₂-U₁ et U₁ représente un atome de chlore ou un groupe sulfato.

6. Colorants d'anthraquinone selon l'une des revendications 1 à 5, où
B₁ représente un reste de formule -CH₂-C(CH₃)₂-CH₂-.

7. Colorants d'anthraquinone selon la revendication 1 de formule 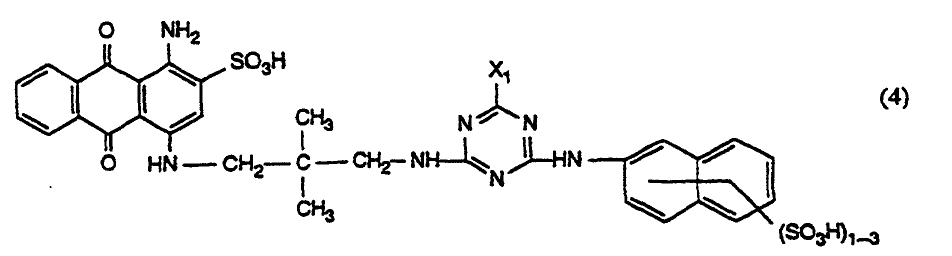 ou 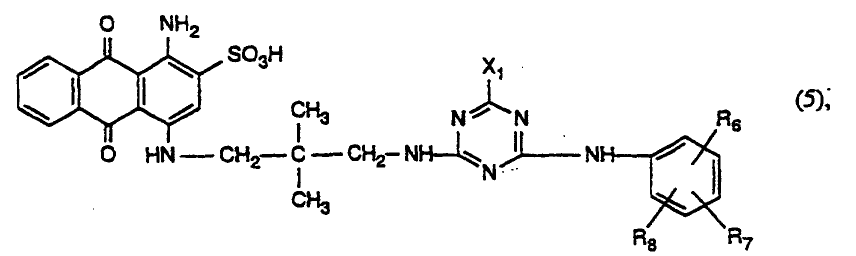 où
R₆, R₇ et R₈ représentent, indépendamment l'un de l'autre, des atomes d'hydrogène, des groupes alkyle en C₁-C₄, alkoxy en C₁-C₄, halogène, sulfo ou un reste de formule -SO₂-Z,
Z représentant un groupe -CH=CH₂ ou -CH₂-CH₂-U₁ et U₁ représente un atome de chlore ou un groupe sulfato.

8. Colorants d'anthraquinone selon la revendication 7 de formule (5), où R₆, R₇ et R₈ représentent, indépendamment les uns des autres, un atome d'hydrogène ou un groupe sulfo.

9. Procédé pour la préparation de colorants d'anthraquinone selon la revendication 1, caractérisé en ce qu'on condense un composé d'anthraquinone de formule 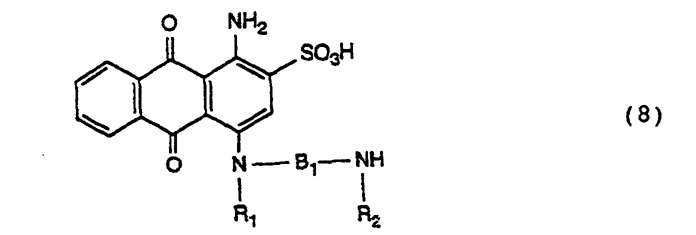 sur un composé de formule 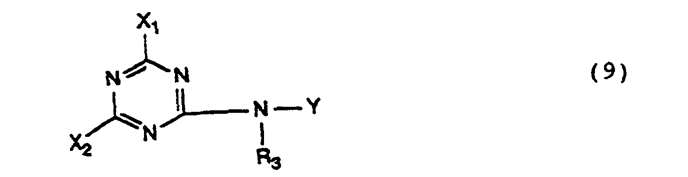 et éventuellement on fait suivre d'une réaction de transformation, X₂ représentant des atomes de chlore ou de fluor et R₁, R₂, R₃, X₁, B₁ et Y ayant les significations données à la revendication 1.

10. Utilisation des colorants d'anthraquinone selon l'une des revendications 1 à 8, ou obtenus selon la revendication 9, pour la teinture ou l'impression de matières fibreuses azotées ou contenant des groupes hydroxyle.

11. Utilisation selon la revendication 10 pour la teinture ou l'impression de matières fibreuses cellulosiques ou matières fibreuses polyamides naturelles ou synthétiques.

## Claims

1. An anthraquinone dye of formula 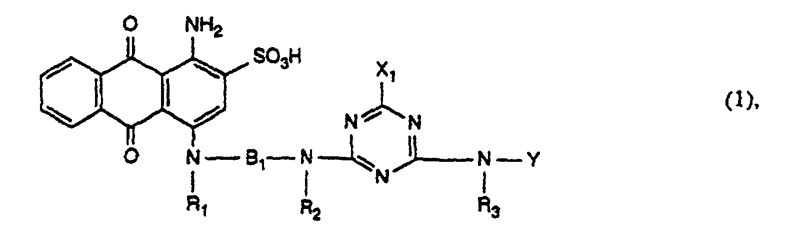 wherein
R₁, R₂ and R₃ are each independently of one another hydrogen or unsubstituted or substituted C₁,-C₁₂alkyl,
X₁ is chloro or fluoro,
B₁ is a radical of formula -CH₂-CH₂-CH(C₂H₅)-, -CH₂-CH(OH)-CH₂- or CH₂-C (CH₃)₂-CH₂-,
Y is hydrogen, unsubstituted or substituted C₁-C₁₂alkyl, or phenyl or naphthyl each unsubstituted or substituted by C₁-C₄alkyl, C₁-C₄alkoxy, C₂-C₄alkanoylamino, halogen, carboxy, sulfo or a radical of formula -SO₂-Z, where
Z is a group of formula -CH=CH₂ or -CH₂-CH₂-U₁ and U₁ is a leaving group.

2. An anthraquinone dye according to claim 1, wherein R₁ and R₂ are hydrogen or C₁-C₄alkyl, and R₃ is hydrogen or C₁-C₈alkyl which is unsubstituted or substituted by hydroxyl, sulfo or sulfato and, with the exception of methyl, may be interrupted by oxygen.

3. An anthraquinone dye according to either claim 1 or claim 2, wherein R₁, R₂ and R₃ are hydrogen.

4. An anthraquinone dye according to any one of claims 1 to 3, wherein Y is hydrogen; C₁-C₁₂alkyl which is unsubstituted or substituted by hydroxyl, sulfo or sulfato and, with the exception of methyl, may be interrupted by oxygen; or phenyl or naphthyl each unsubstituted or substituted by C₁-C₄alkyl, C₁-C₄alkoxy, C₂-C₄alkanoylamino, halogen, carboxy, sulfo or a radical of formula -SO₂-Z, where Z is a group of formula -CH=CH₂ OR -CH₂-CH₂-U₁ and U₁ is chloro or sulfato; or an anthraquinone radical of formula 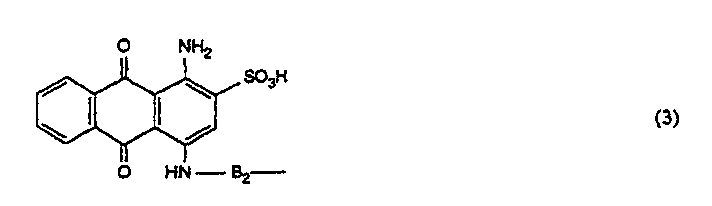 where B₂ is C₂-C₁₂alkylene which is unsubstituted or substituted by hydroxyl, sulfo or sulfato and which may be interrupted by oxygen, or methylene-phenylene-methylene which is unsubstituted or substituted in the phenylene ring by C₁-C₄alkyl, C₁-C₄alkoxy, C₂-C₄alkanoylamino, halogen, carboxy or sulfo.

5. An anthraquinone dye according to any one of claims 1 to 4, wherein Y is phenyl or naphthyl each unsubstituted or substituted by C₁-C₄alkoxy, halogen, sulfo or a radical of formula -SO₂-Z, where Z is a group of formula -CH=CH₂ or -CH₂-CH₂-U₁ and U₁ is chloro or sulfato.

6. An anthraquinone dye according to any one of claims 1 to 5, wherein B₁ is a radical of formula -CH₂-C(CH₃)₂-CH₂-.

7. An anthraquinone dye according to claim 1, of formula 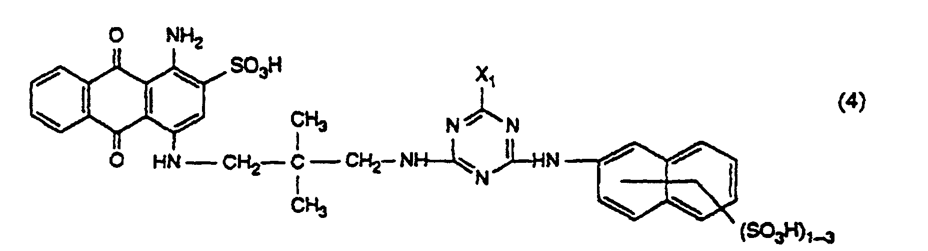 or 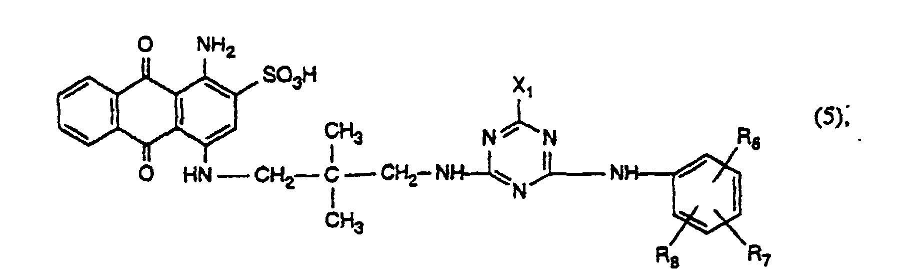 wherein R₆, R₇ and R₈ are each independently of one another hydrogen, C₁-C₄alkyl, C₁-C₄alkoxy, halogen, sulfo or a radical of formula -SO₂-Z where Z is a group of formula -CH=CH₂ or -CH₂-CH₂-U₁ and U₁ is chloro or sulfato.

8. An anthraquinone dye according to claim 7 of formula (5) wherein R₆, R₇ and R₈ are each independently of one another hydrogen or sulfo.

9. A process for the preparation of an anthraquinone dye according to claim 1, which comprises condensing an anthraquinone compound of formula 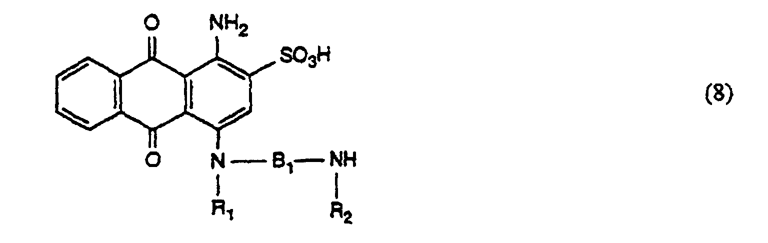 with a compound of formula 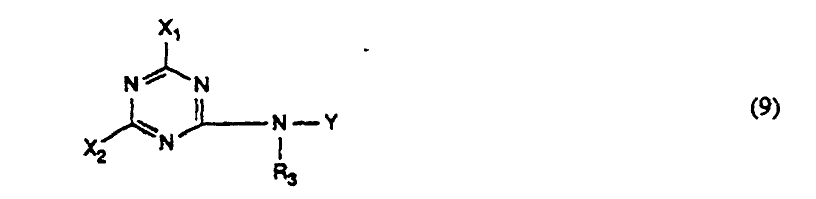 and subsequently carrying out if desired a conversion reaction, where X₂ is chloro or fluoro and R₁, R₂, R₃ X₁, B₁ and Y are as defined in claim 1.

10. Use of an anthraquinone dye according to any one of claims 1 to 8 or of an anthraquinone dye obtained according to claim 13 for dyeing or printing hydroxyl-containing or nitrogen-containing fibre materials.

11. Use according to claim 10 for dyeing or printing cellulosic fibre materials or natural or synthetic polyamide fibre materials.
